# FASCICULE DE BREVET EUROPEEN

(11) **EP 0 433 183 B1**
(45) Date de publication et mention de la délivrance du brevet: **12.10.1994**
(21) Numéro de dépôt: 90420497.1
(22) Date de dépôt: 20.11.1990
(51) Int. Cl.: H02B 13/02, H01H 33/02

(54) **Interrupteur tripolaire à haute tension et à isolement gazeux**
Dreipoliger gasisolierter Hochspannungsschalter
Three-pole gasinsulated high tension circuit breaker

(30) Priorité: 13.12.1989 FR 8916592
(43) Date de publication de la demande: 19.06.1991
(73) Titulaire: MERLIN GERIN, F-38240 Meylan (FR)
(72) Inventeur: Abad, Dominique, F-38050 Grenoble Cedex (FR); Balsarin, Gabriel, F-38050 Grenoble Cedex (FR); Canovas, Diégo, F-38050 Grenoble Cedex (FR); Chevalier, Francis, F-38050 Grenoble Cedex (FR); Pettier, Claude, F-38050 Grenoble Cedex (FR)
(74) Mandataire: Hecké, Gérard

(56) Documents cités:
- EP-A- 0 068 951
- FR-A- 2 242 794
- FR-A- 2 271 685
- FR-A- 2 305 871

## Description

L'invention est relative à un interrupteur à haute tension et à enveloppe étanche remplie de gaz à rigidité diélectrique élevée, notamment de l'hexafluorure de soufre, renfermant une pluralité de pôles identiques, et un palonnier de commande traversant la paroi de l'enveloppe avec interposition d'un joint d'étanchéité dynamique, chaque pôle comportant :
- un contact fixe porté par un plot conducteur en liaison électrique avec une première borne de raccordement,
- un contact mobile agencé à l'extrémité d'une broche conductrice animée d'un mouvement de translation entre la position de fermeture et la position d'ouverture, ladite broche étant accouplée mécaniquement par son extrémité opposée à une manivelle du palonnier, et reliée électriquement par une tresse conductrice à une deuxième borne de raccordement,
- et un dispositif d'autosoufflage à compression ayant un volume pistonnable destiné à envoyer un jet de gaz comprimé vers la zone d'arc lors du déplacement de la broche vers la position d'ouverture.

Dans le document FR-A 2242794, l'enveloppe est réalisée en matière isolante, et une barre d'amorçage est disposée en regard des différents pôles à l'intérieur de l'enveloppe. En position d'ouverture des contacts, la distance d'amorçage entre les contacts mobiles des différents pôles et la barre d'amorçage est inférieure à celle des contacts séparés afin d'éviter tout amorçage entre ces derniers.

Selon un autre interrupteur connu, une dégradation superficielle d'isolant peut engendrer un courant de fuite entre les contacts se trouvant en position d'ouverture. En l'absence de référence à la masse, l'une des bornes de raccordement d'un pôle est susceptible d'être portée à un potentiel dangereux. Il en résulte que la fonction de sectionnement de l'interrupteur n'est plus assurée.

L'objet de l'invention consiste à améliorer la sécurité d'un interrupteur à haute tension et à isolement gazeux.

L'interrupteur selon l'invention est caractérisé en ce que l'enveloppe métallique est au potentiel de la terre et possède des orifices pour des traversées isolantes des premières et deuxième bornes, que chaque pôle comporte une chambre isolante de révolution coiffant le dispositif d'autosoufflage, et les contacts fixe et mobile, l'une des extrémités de la chambre étant agencée en palier de guidage en translation de la broche, et l'autre extrémité étant fixée à la paroi interne de l'enveloppe, laquelle joue le rôle d'anneau de masse, et qu'un intervalle annulaire est ménagé entre la chambre et la traversée de la première borne correspondante.

Un tel agencement supprime tout amorçage direct entre les contacts ouverts. L'enveloppe commune des pôles joue le rôle d'anneau de masse, ce qui évite d'incorporer une barre auxiliaire d'amorçage. La fonction de sectionnement de l'interrupteur est alors assurée, autorisant un contact direct sans danger avec la traversée isolante de la première borne de raccordement de chaque pôle.

La chambre isolante comporte une première partie en forme de cylindre à l'intérieur duquel coulisse un piston du dispositif d'autosoufflage, le piston étant solidaire de la broche mobile, et portant une tuyère de soufflage communiquant avec le volume pistonnable par des orifices de passage.

La chambre est dotée d'une deuxième partie en forme de cloche adjacente au cylindre, la surface latérale de la cloche ayant une lumière de communication entre la zone d'arc de chaque pôle, et le volume d'expansion de l'enveloppe.

D'autres avantages ressortiront plus clairement de la description qui va suivre d'un mode de réalisation de l'invention, donné à titre d'exemple non limitatif, et représenté aux dessins annexés, dans lesquels:

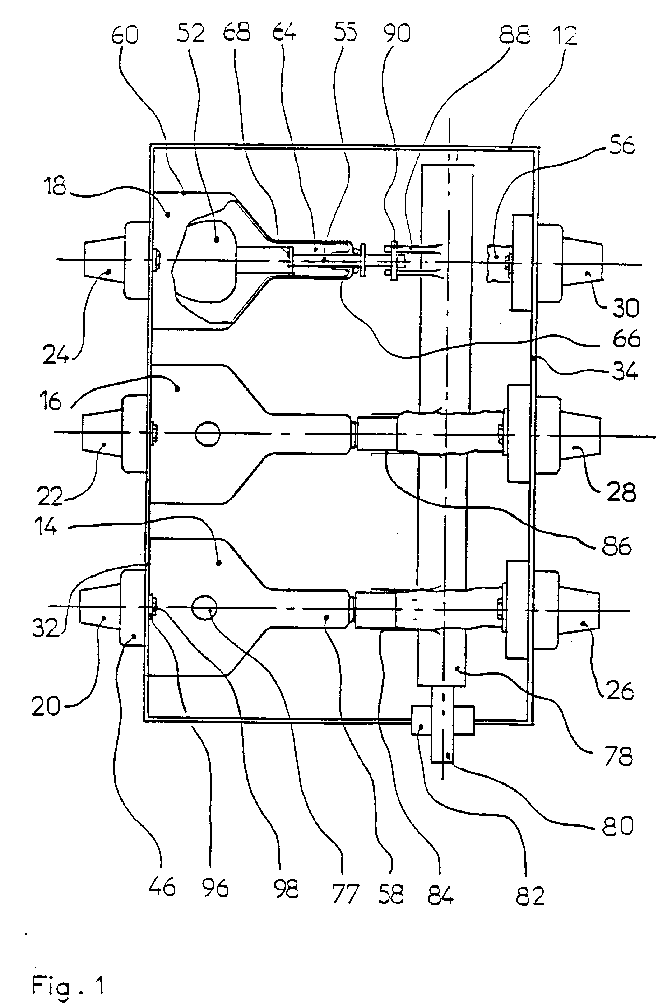

- la figure 1 est une vue en plan, partiellement en coupe d'un interrupteur tripolaire selon l'invention, le couvercle de l'enveloppe étant enlevé,
- la figure 2 montre une vue en coupe selon la ligne 2-2 de la figure 1, en position de fermeture de l'interrupteur,
- la figure 3 est une vue identique à la figure 2, en position d'ouverture de l'interrupteur.

Sur les figures, un interrupteur 10 tripolaire à haute tension, est logé à l'intérieur d'une enveloppe 12 métallique étanche, remplie de gaz isolant à rigidité diélectrique élevée, notamment de l'hexafluorure de soufre SF6. L'enveloppe 12 comporte un carter de forme parallélépipédique réalisé en alliage d'aluminium moulé, et renfermant trois pôles 14, 16, 18 identiques s'étendant parallèlement l'un à l'autre selon une nappe horizontale.

Le raccordement électrique de l'interrupteur 10 s'effectue au moyen d'une première série de bornes 20, 22, 24, et d'une deuxième série de bornes 26, 28, 30 traversant respectivement deux faces 32, 34 latérales opposées de l'enveloppe 12.

Chaque pôle 14, 16, 18, comporte un contact fixe 36 à tulipe porté par un plot 38 conducteur solidarisé à un insert 40 de la borne 20, 22, 24 correspondante de la première série. L'insert 40 est enrobé dans la traversée 42 isolante, laquelle comporte une embase 43 interne d'appui et une douille 44 extérieure filetée destiné à recevoir un écrou 46 de fixation.

la traversée 42 de toutes les bornes 20 à 30 s'adapte dans un orifice 48 conjugué de l'enveloppe 12, avec interposition d'un joint 50 d'étanchéité entre l'embase 43 d'appui et la paroi interne de la face 32.

Le plot 38 de contact de chaque pôle supporte d'autre part un déflecteur 52 métallique entourant coaxiallement le contact fixe 36 pour obtenir une répartition uniforne du champ électrique dans la zone de séparation des contacts.

Chaque contact fixe 36 coopère avec un contact mobile 54 agencé à l'une des extrémités d'une broche 55 conductrice. L'extrémité opposée de cette broche 55 est reliée par une tresse 56 de liaison à la borne 26, 28, 30 correspondante de la deuxième série.

Une chambre 58 fixe de révolution, est agencée coaxialement autour du déflecteur 52 et de la broche 55 coulissante de chaque pôle 14, 16, 18. La chambre 58 en matériau isolant comprend une partie en forme de cloche à fond ouvert 60 fixée à l'enveloppe 12, un cylindre 62 faisant partie d'un dispositif d'autosoufflage 64 à compression, et un palier 66 de guidage en translation de la broche 55. Le cylindre 62 coopère avec un piston 68 assujetti à la broche 55 coulissante, de manière à provoquer la compression du gaz SF6 dans un volume 70 pistonnable au cours du mouvement de coulissement de la broche 55. Le piston 68 mobile porte une tuyère 72 de soufflage communiquant par des orifices 74 avec le volume 70 pistonnable, autorisant l'éjection de gaz comprimé vers la zone d'arc 76 après séparation des contacts 36, 54.

La cloche 60 des chambres 58 comporte au moins une lumière 77 pour la communication de la zone d'arc 76 de chaque pôle avec le volume interne de l'enveloppe 12.

Un palonnier 78 en matériau isolant est monté à rotation limitée à l'intérieur de l'enveloppe 12, en étant accouplé à un arbre 80 du mécanisme de commande (non représenté). L'étanchéité au niveau du passage de l'arbre 80 à travers l'enveloppe 12 s'effectue au moyen d'un joint dynamique 82. Le palonnier 78 s'étend perpendiculairement aux trois pôles 14, 16, 18, et comporte trois manivelles 84, 86, 88 en liaison mécanique avec les broches 55 coulissantes, de manière à transformer le mouvement de rotation du palonnier 78 en un mouvement de translation de chaque contact mobile 54. Chaque manivelle 84, 86, 88, comporte un axe 90 d'accouplement engagé dans une encoche 92 oblongue d'une pièce de transmission en forme de fourche 94 solidaire de la broche 55 correspondante.

La base de chaque cloche 60 est équipée de brides 96 à vis 98 pour la fixation de la chambre 58 correspondante à la paroi interne de la face 32. Dans chaque chambre 58, un intervalle 100 annulaire est agencé entre la cloche 60 et l'embase 43 de la traversée 42 isolante.

La chambre 58 isolante et les traversées 42 se trouvent en liaison directe avec l'enveloppe métallique 12.

Le fonctionnement d'un pôle de l'interrupteur 10 à haute tension selon l'invention est le suivant :

L'enveloppe 12 contient du SF6 à la pression atmosphérique, ou voisine de cette dernière.

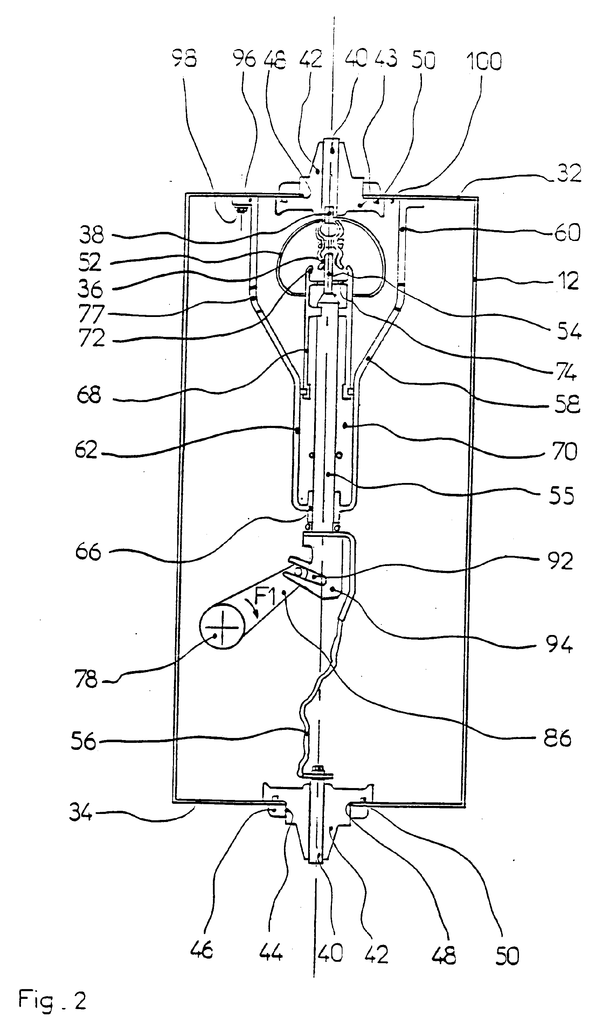

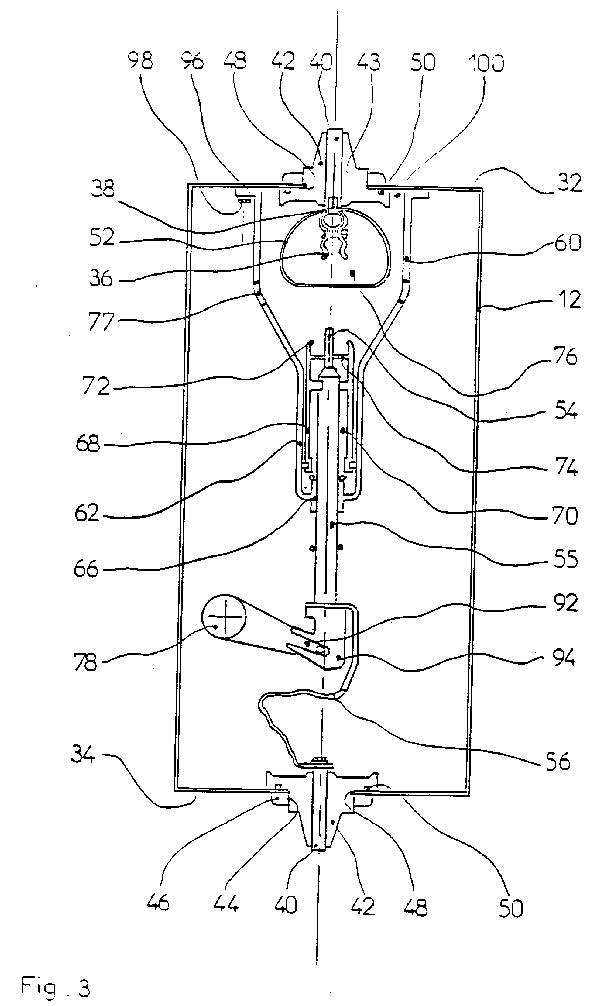

Le passage de la position de fermeture (fig. 2) vers la position d'ouverture (fig. 3) s'opère par une rotation limitée du palonnier 78 dans le sens des aiguilles d'une montre (flèche F1 sur fig. 2). Le guidage axial en translation de la broche 55 est assuré par le palier 66 de la chambre 58 isolante. Au début de la course d'ouverture, une précompression de gaz est engendrée dans le volume 70 pistonnable jusqu'à l'instant de séparation des contacts 36, 54. Le mouvement de translation poursuivi de la broche 55 provoque d'une manière bien connue l'extinction de l'arc par éjection de gaz comprimé à travers les orifices 74 et la tuyère 72 vers la zone d'arc 76.

En position d'ouverture du pôle (fig. 3), une distance d'isolement ayant environ soixante millimètres, sépare les contacts fixe 36 et mobile 54. En cas de dégradation superficielle de l'isolant de la chambre 58, un courant de fuite est susceptible de cheminer le long de la chambre 58 entre la broche 55 conductrice et l'enveloppe 12 métallique, laquelle se trouve au potentiel de la terre. Un tel courant de fuite sur le trajet de cheminement est sans danger immédiat. Il peut engendrer un amorçage à la masse, lequel est facilement détecté par un dispositif de protection différentielle à tore homopolaire.

L'enveloppe 12 métallique joue ainsi le rôle d'anneau de masse pour l'ensemble des trois pôles 14, 16, 18. La présence de l'intervalle 100 radial entre chaque traversée 42 et la chambre 58 correspondante évite tout amorçage direct entre contacts fixe 36 et mobile 54. Les traversées 42 isolantes des bornes 20, 22, 24, se trouvent au potentiel de la masse et peuvent être touchées sans danger lorsque les contacts 36, 54 sont ouverts (fig. 3), contribuant ainsi à la fonction de sectionnement de l'interrupteur 10.

Selon une variante, les pôles 14, 16, 18 de l'interrupteur 10 tripolaire peuvent être disposés selon les arêtes d'un prisme droit, à l'intérieur de l'enveloppe 12 métallique.

## Revendications

1. Interrupteur à haute tension et à enveloppe (12) étanche remplie de gaz à rigidité diélectrique élevée, notamment de l'hexafluorure de soufre, renfermant une pluralité de pôles (14, 16, 18) identiques et un palonnier (78) de commande traversant la paroi de l'enveloppe (12) avec interposition d'un joint d'étanchéité dynamique, chaque pôle (14, 16, 18) comportant:
- un contact fixe (36) porté par un plot (38) conducteur en liaison électrique avec une première borne (20, 22, 24) de raccordement,
- un contact mobile (54) agencé à l'extrémité d'une broche (55) conductrice animée d'un mouvement de translation entre la position de fermeture et la position d'ouverture, ladite broche étant accouplée mécaniquement par son extrémité opposée à une manivelle (84, 86, 88) du palonnier(78) et reliée électriquement par une tresse (56) conductrice à une deuxième borne (26, 28, 30) de raccordement,
- et un dispositif d'autosoufflage (64) à compression, ayant un volume pistonnable (70) destiné à envoyer un jet de gaz comprimé vers la zone d'arc (76) lors du déplacement de la broche (55) vers la position d'ouverture, caractérisé en ce que l'enveloppe (12) métallique est au potentiel de la terre et possède des orifices (48) pour des traversées (42) isolantes des première et deuxième bornes(20, 22, 24, 26, 28, 30), que chaque pôle (14, 16, 18) comporte une chambre (58) isolante de révolution coiffant le dispositif d'autosoufflage (64), et les contacts fixe (36) et mobile (54), l'une des extrémités de la chambre (58) étant agencée en palier (66) de guidage en translation de la broche (55), et l'autre extrémité étant fixée à la paroi interne de l'enveloppe (12), laquelle joue le rôle d'anneau de masse, et qu'un intervalle (100) annulaire est ménagé entre la chambre (58) et la traversée (42) de la première borne (20, 22, 24) correspondante.

2. Interrupteur à haute tension selon la revendication 1, caractérisé en ce que la chambre (58) isolante comporte une première partie en forme de cylindre (62) à l'intérieur duquel coulisse un piston (68) du dispositif d'autosoufflage (64), le piston (68) étant solidaire de la broche (55) mobile, et portant une tuyère (72) de soufflage communiquant avec le volume pistonnable (70) par des orifices (74) de passage.

3. Interrupteur à haute tension selon la revendication 2, caractérisé en ce que la chambre (58) est dotée d'une deuxième partie en forme de cloche (60) adjacente au cylindre (62), la surface latérale de la cloche (60) ayant une lumière (77) de communication entre la zone d'arc (76) de chaque pôle (14, 16, 18), et le volume d'expansion de l'enveloppe (12).

4. Interrupteur à haute tension selon l'une des revendications 1 à 3, caractérisé en ce que la traversée (42) isolante de la première borne(20, 22, 24) de chaque pôle (14, 16, 18) comporte une embase (43) interne prenant appui sur la paroi de l'enveloppe (12) avec interposition d'un joint (50) d'étanchéité, et une douille (44) extérieure filetée coopérant avec un écrou (46) de fixation.

5. Interrupteur à haute tension selon la revendication 4, caractérisé en ce que le plot (38) de chaque pôle (14, 16, 18) porte un déflecteur (52) métallique de répartition du champ électrique autour du contact fixe (36) en tulipe, et que la tuyère (72) fait saillie du contact mobile (54), en entourant à faible jeu radial le contact fixe (36) en position de fermeture de l'interrupteur.

## Patentansprüche

1. Hochspannungsschalter in einem dicht verschlossenen, mit einem Gas hoher dielektrischer Festigkeit, insbesondere Schwefelhexafluorid gefüllten Gehäuse (12), in dem mehrere identische Pole (14, 16, 18) sowie ein Schaltgestänge (78) angeordnet sind, das mit einer zwischengefügten dynamischen Dichtung durch die Wand des Gehäuses (12) geführt ist, wobei jeder Pol (14, 16, 18) folgende Elemente umfaßt:
- einen feststehenden Kontakt (36), der von einem leitenden, elektrisch mit einer ersten Anschlußklemme (20, 22, 24) verbundenen Kontaktstift (38) getragen wird,
- einen am Ende eines leitenden Gleitschiebers (55) angebrachten beweglichen Kontakt (54), wobei der in einer Translationsbewegung zwischen der Einschaltstellung und der Ausschaltstellung hin- und hergeschobene genannte Gleitschieber an seinem gegenüberliegenden Ende mechanisch mit einem Kurbelzapfen (84, 86, 88) des Schaltgestänges (78) gekuppelt und über ein flexibles Leitungsband (56) elektrisch mit einer zweiten Anschlußklemme (26, 28, 20) verbunden ist,
- eine Autokompressionsvorrichtung (64) mit einem Verdrängungsraum (70) zur Leitung eines komprimierten Gasstroms in die Lichtbogenzone (76), wenn sich der Gleitschieber (55) in die Ausschaltstellung bewegt, dadurch gekennzeichnet, daß das Metallgehäuse (12) auf Erdpotential liegt und öffnungen (48) für Isolierstoffdurchführungen (42) der ersten und zweiten Anschlußklemmen (20, 22, 24, 26, 28, 30) aufweist, daß jeder Pol (14, 16, 18) eine die Autokompressionsvorrichtung (64) sowie die feststehenden Kontakte (36) und die beweglichen Kontakte (54) umschließende Isolierstofflöschkammer (58) mit kreisförmigem Querschnitt umfaßt, wobei ein Ende der Löschkammer (58) als Kragen (66) zur Geradführung des Gleitschiebers (55) ausgebildet und das andere Ende an der Innenwand des als Massering dienenden Gehäuses (12) befestigt ist, und daß ein umlaufender Abstand (100) zwischen der Löschkammer (58) und der Durchführung (42) der zugehörigen ersten Anschlußklemme (20, 22, 24) ausgebildet ist.

2. Hochspannungsschalter nach Anspruch 1, dadurch gekennzeichnet, daß die Isolierstofflöschkammer (58) einen ersten Teil in Form eines Zylinders (62) umfaßt, in dessem Inneren ein Kolben (68) der Autokompressionsvorrichtung (64) gleitet, der mit dem beweglichen Gleitschieber (55) fest verbunden ist und eine über Durchgangsöffnungen (74) mit dem Verdrängungsraum (70) verbundene Blasdüse (72) trägt.

3. Hochspannungsschalter nach Anspruch 2, dadurch gekennzeichnet, daß die Isoherstofflöschkammer (58) einen an den Zylinder (62) angrenzenden zweiten Teil in Form einer Glocke (60) mit einer in deren Seitenwand ausgebildeten Öffnung (77) umfaßt, über die die Lichtbogenzone (76) jedes Pols (14, 16, 18) mit dem Gasausdehnungsraum des Gehäuses (12) verbunden ist.

4. Hochspannungsschalter nach einem der Ansprüche 1 bis 3, dadurch gekennzeichnet, daß die Isolierstoffdurchführung (42) der ersten Anschlußklemme (20, 22, 24) jedes Pols (14, 16, 18) ein inneres Stützelement (43), das mit einer zwischengefügten Dichtung (50) auf der Wand des Gehäuses (12) aufliegt, sowie eine mit einem Gewinde versehene äußere Kappe (44) aufweist, die mit einer Befestigungsmutter (46) zusammenwirkt.

5. Hochspannungsschalter nach Anspruch 4, dadurch gekennzeichnet, daß der Kontaktstift (38) jedes Pols (14, 16, 18) einen Metallschirm (52) zur gleichförmigen Verteilung des elektrischen Felds um den feststehenden Tulpenkontakt (36) herum aufweist und daß die Blasdüse (72) den beweglichen Kontakt (54) umkragt und dabei in der Einschaltstellung des Schalters den feststehenden Kontakt (36) mit einem geringen Radialspiel umfaßt.

## Claims

1. A high-voltage switch with a sealed enclosure (12) filled with a high dielectric strength gas, notably sulphur hexafluoride, containing a plurality of identical pole-units (14,16,18), and an operating bar (78) passing through the wall of the enclosure (12) with a flexible seal interposed, each pole-unit (14,16,18) comprising :
- a stationary contact (36) supported by a conducting stud (38) in electrical connection with a first connecting terminal (20,22,24),
- a movable contact (54) arranged at the end of a conducting rod (55) animated with a translation movement between the closed position and the open position, said rod being mechanically coupled by its opposite end to a crank (84,86,88) of the bar (78) and electrically connected by a conducting braid (56) to a second connecting terminal (26,28,30),
- and a compression gas-blast device (64), having a compressible volume (70) designed to send a jet of compressed gas to the arcing zone (76) when the rod (55) moves to the open position, characterized in that the metal enclosure (12) is at earth potential and has orifices (48) for insulating bushings (42) of the first and second terminals (20,22,24,26,28,30), that each pole-unit (14,16,18) comprises an insulating revolution chamber (58) capping the gas-blast device (64), and the stationary (36) and movable contacts (54), one of the ends of the chamber (58) being arranged as a bearing (66) for guiding the rod (55) in translation, and the other end being fixed to the internal wall of the enclosure (12), which acts as ground ring, and that an annular gap (100) is arranged between the chamber (58) and the bushing (42) of the corresponding first terminal (20,22,24).

2. The high-voltage switch according to claim 1, characterized in that the insulating chamber (58) comprises a first part in the shape of a cylinder (62) inside which a piston (68) of the gas-blast device (64) slides, the piston (68) being securedly united to the movable rod (55), and bearing a blast nozzle (72) communicating with the compressible volume (70) via communication orifices (74).

3. The high-voltage switch according to claim 2, characterized in that the chamber (58) is equipped with a second bell-shaped part (60) adjacent to the cylinder (62), the lateral surface of the bell (60) having a communication aperture (77) between the arcing zone (76) of each pole-unit (14,16,18), and the expansion volume of the enclosure (12).

4. The high-voltage switch according to one of the claims 1 to 3, characterized in that the insulating bushing (42) of the first terminal (20,22,24) of each pole-unit (14,16,18) comprises an internal base (43) bearing on the wall of the enclosure (12) with a seal (50) interposed, and an external threaded sleeve (44) cooperating with a fixing nut (46).

5. The high-voltage switch according to claim 4, characterized in that the stud (38) of each pole-unit (14,16,18) bears a metal deflector (52) for distribution of the electrical field around the stationary tulip-finger contact (36), and that the nozzle (72) protrudes out from the movable contact (54), and surrounds the stationary contact (36) with a small radial clearance in the closed position of the switch.
